# EUROPÄISCHE PATENTSCHRIFT

(11) **EP 1 341 162 B1**
(45) Veröffentlichungstag und Bekanntmachung des Hinweises auf die Patenterteilung: **27.04.2005**
(21) Anmeldenummer: 03002849.2
(22) Anmeldetag: 07.02.2003
(51) Int. Cl.: G10L 21/02, G10L 15/20, F24C 15/20, H04R 1/34

(54) **Elektrisches Gerät, insbesondere Dunstabzugshaube**
Electric apparatus, in particular fume extracting hood
Appareil électrique, particulièrement hotte d'aspiration

(30) Priorität: 27.02.2002 DE 10208465
(43) Veröffentlichungstag der Anmeldung: 03.09.2003
(73) Patentinhaber: BSH Bosch und Siemens Hausgeräte GmbH, 81739 München (DE)
(72) Erfinder: Maase, Jens, 93053 Regensburg (DE)

(56) Entgegenhaltungen:
- EP-A- 0 011 817
- EP-A- 1 176 377
- WO-A-01/59763
- US-A- 2 838 127
- US-A- 4 340 799
- US-A- 5 962 060

## Beschreibung

Die Erfindung bezieht sich auf ein elektrisches Haushaltgerät, insbesondere eine Dunstabzugshaube, mit einer ein Mikrofon aufweisenden Spracheingabeeinheit.

Aus der WO 01/59763 A1 ist ein Elektrogerät mit einer Spracheingabeeinheit bekannt. Der Spracheingabeeinheit ist eine Sprachverarbeitungseinheit nachgeordnet, die aus gesprochenen Eingabebefehlen Steuersignale ableitet zum Steuern von Funktionen des Haushaltgerätes. Es ist eine Betriebsstatus-Erkennungseinheit vorgesehen, die den Betriebsstatus des Haushaltgerätes oder anderer Geräuschquellen erkennt und an die Sprachverarbeitungseinheit meldet. Die Sprachverarbeitungseinheit nimmt eine Störgeräuschkorrektur nur dann vor, wenn eine Geräuschquelle eingeschaltet ist. Das bekannte Verfahren zur Spracheingabe mit Korrektur von Störsignalen ist dadurch gekennzeichnet, dass bei Spracheingabe zur Steuerung eines Gerätes der Betriebsstatus zumindest einer die Spracheingabe störenden Geräuschquelle abgefragt wird und dass die Sprachverarbeitungseinheit eine Störgeräuschkorrektur nur vornimmt, wenn eine Geräuschquelle eingeschaltet ist. Es wird also, wenn der Sprachverarbeitungseinheit ein Sprachsignal zur Erkennung vorgelegt wird, nicht versucht, in jedem Fall eine Störgeräuschkorrektur vorzunehmen. Dies führt in all den Fällen zu einer Verbesserung der Spracherkennung, in denen das Sprachsignal gar nicht durch Störgeräusche belastet ist. Denn durch den Versuch, ein nicht vorhandenes Störgeräusch aus dem Sprachsignal zu entfernen oder korrigierend zu berücksichtigen, wird die Qualität des Sprachsignals verringert.

Ein Problem stellt es in einem Haushalt dar, wenn verschiedene Geräte durch Sprache gesteuert werden oder wenn Geräte Sprachsignale abgeben. Dann wird durch Fehlgeräusche die Erkennungssicherheit der Sprachsteuerung negativ beeinflusst. Diese Geräusche entstehen durch "Dazwischensprechen" von Personen oder durch das Radio, das Fernsehgerät oder auch durch andere im Umfeld betriebene Geräte. Aus dem Stand der Technik ist es bekannt, eine sogenannte "Push to talk"-Taste einzusetzen, um derartige Störungen weitgehend zu unterdrücken. Nur solange ein Bediener diese Taste drückt und spricht, nimmt die Sprachbedieneinheit Sprachsignale auf. Damit lassen sich allerdings synchron auftretende Störungen nicht unterdrücken. Außerdem ist es notwendig, dass der Bediener, während er spricht, ständig die Taste gedrückt halten muss.

Es ist die Aufgabe der Erfindung, eine Vorrichtung zu schaffen, mit der eine Verbesserung bei der Aufnahme von Sprachsignalen im Haushaltsbereich erreicht wird.

Bei einem elektrischen Haushaltgerät der eingangs genannten Art wird diese Aufgabe durch eine Vorrichtung nach Anspruch 1 gelöst.

Durch die Erfindung wird erreicht, dass der Bereich der Aufnahme von Sprachsignalen eingeschränkt ist. Dadurch werden Fehlgeräusche von einer zufälligen Erkennung ausgeschlossen, die zu unerwünschten Steuerbefehlen in dem Haushaltgerät führen könnten.

Vorteilhafte Weiterbildungen ergeben sich aus den Unteransprüchen.

Als vorteilhaft erweist sich erfindungsgemäß ein Haushaltgerät, das mit einem räumlich selektiven, passiven Schallaufnehmer ausgestattet ist. Der Schallaufnehmer ist dem Mikrofon oder dem Mikrofonarray vorgeschaltet und sorgt für eine selektive Bündelung der aus einem vorgegebenem Raumbereich eingestrahlten Schallwellen.

In einer anderen vorteilhaften Weiterbildung ist das Haushaltgerät dadurch gekennzeichnet, dass der Schallaufnehmer ein aktiver Schallaufnehmer mit einem Mikrofonarray ist.

Besonders geeignet ist eine Ausbildung des Haushaltgeräts, bei der der Schallaufnehmer wenigstens zwei Schallflächen umfasst.

Vorzugsweise sind die wenigstens zwei Schallflächen unter einem rechten Winkel zueinander angeordnet sind.

Als vorteilhaft erweist es sich, wenn an dem Haushaltgerät eine Auswerteeinheit vorhanden ist, durch die von den Schallflächen aufgenommene Schallsignale durch Rechenvorschriften miteinander verknüpfbar sind.

Gemäß einer Weiterbildung der Erfindung lassen sich die von den Schallflächen aufgenommenen Signale entsprechend einer voreingestellten Richtung abdämpfen.

Weitere vorteilhafte Ausbildungen der Erfindung ergeben sich aus der nachfolgenden Beschreibung.

Die Erfindung wird in einem Ausführungsbeispiel und der Zeichnungen näher erläutert. Diese zeigen:

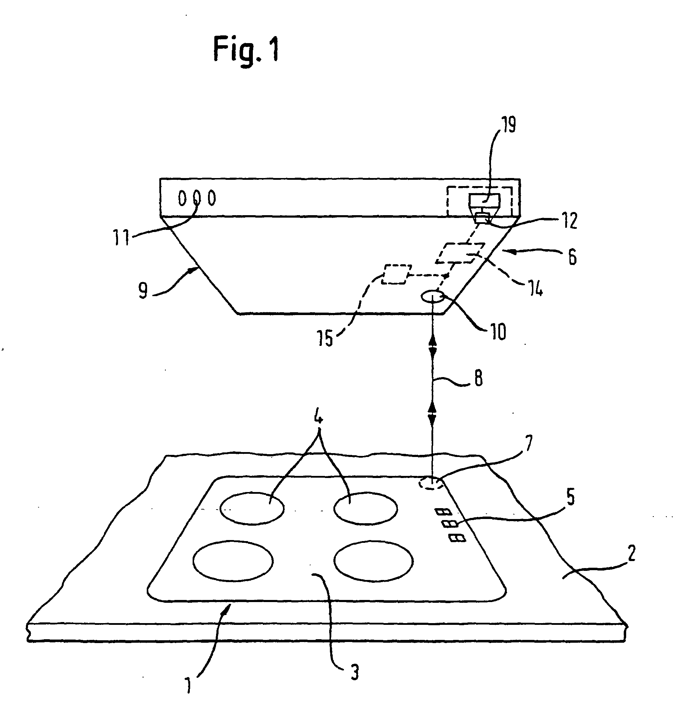

- Figur 1: eine Anordnung aus einer Dunstabzugshaube und einem Kochfeld in perspektivischer Darstellung,
- Figur 2 bis 4: ein Mikrofon mit einem Schallfächer und
- Figur 5a, b: Sprachsignale vor und nach ihrer Bearbeitung

Ein Kochfeld 1 ist in einem Ausschnitt einer Arbeitsplatte 2 montiert. Auf einer Kochfeldplatte 3, die insbesondere aus Glaskeramik ist, sind verschiedene Kochzonen 4 markiert. Entsprechend den Eingaben über eine Bedien- und Anzeigeeinheit 5 des Kochfeldes 1 können in an sich bekannter Weise von unterhalb der Kochfeldplatte 3 angeordneten Heizelementen über eine Steuereinheit auf den Kochzonen 4 abgestellte (hier nicht dargestellte) Kochgefäße beheizt werden. Dabei ist die Bedien- und Anzeigeeinheit 5 aus Bequemlichkeits- und Sicherheitsgründen vorhanden. Sie lässt sich auf ein sicherheitstechnisch vorgeschriebenes Minimum reduzieren, bei der die Gesamtanordnung auch über eine Sprachbedieneinheit 6 verfügt, wie nachfolgend beschrieben ist.

In dem Kochfeld 1 ist weiterhin eine Sende- und Empfangseinheit 7 vorgesehen, die über eine drahtlos arbeitende Übertragungsstrecke 8 in an sich bekannter Weise mit einer oberhalb des Kochfeldes 1 angeordneten Dunstabzugshaube 9 kommuniziert. Die Übertragungsstrecke 8 kann dabei beispielsweise als Funkstrecke realisiert sein. Zur Kommunikation mit dem Kochfeld 1 verfügt die Dunstabzugshaube 9 über eine Sendeund Empfangseinheit 10. Ebenso weist die Dunstabzugshaube 9 Bedien- und Anzeigeelemente 11 auf, über die Funktionen der Dunstabzugshaube 9 betätigt bzw. angezeigt werden. Um eine Spracheingabe zu ermöglichen, weist die Sprachbedieneinheit 6 ein Mikrofon 12 auf, das räumlich hinter einem optischen Sensor 13 angeordnet ist. Von dem Mikrofon 12 aufgenommene Signale werden einem Spracherkenner 14 zugeführt. Dieser steht mit einer Sprachauswerteeinheit 15 in Verbindung, die aus dem empfangenen Sprachsignal ein Signal zur Steuerung der Dunstabzugshaube 9 und/oder des Kochfeldes 1 ableitet. In letzterem Fall wird dieses Signal über die Übertragungsstrecke 8 zu dem Kochfeld 1 übertragen.

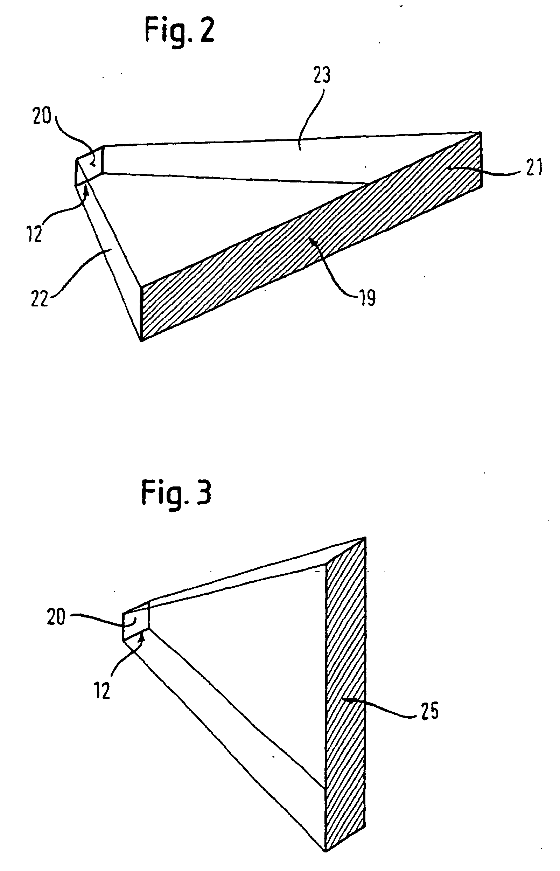

Um eine gegenüber herkömmlichen Mikrofonen selektive und bessere Schallaufnahme zu erreichen, ist dem Mikrofon 12 ein räumlich selektiver Schallaufnehmer 19 (Fig. 2) vorgeschaltet, der die Sprachsignale auf eine Eingangsfläche 20 des Mikrofons 12 leitet. Der Schallaufnehmer 19 weist eine Eingangsfläche 21 und unter einem spitzen Winkel zu dieser auf die Eingangsfläche 20 des Mikrofons 12 zulaufende Seitenwände 22, 23 auf, so dass der Schallaufnehmer 19 insgesamt den Grundriss eines Trapezes hat. Es versteht sich, dass die Seitenwände auch gekrümmt sein können und beispielsweise die Form von Parabelästen haben können. Wenn das Mikrofon im Brennpunkt dieser Parabel angeordnet ist, wird eine sehr gute Schallaufnahme erreicht.

Das Mikrofon 12 ist im einfachsten Fall ein passives Richtmikrofon. In einem aufwendigeren Fall wird ein aktives Richtmikrofon eingesetzt. Dieses aktive Richtmikrofon ist bevorzugt ein Mikrofonarray. Vorzugsweise ist das Mikrofonarray in seiner Richtung schwenkbar. Schall wird nur dann aufgenommen, wenn die Schallquelle vor der Eingangsfläche 20 des Schallaufnehmers 19 liegt. Störquellen, die sich nicht vor der Eingangsfläche 21 des Schallaufnehmers 19 befinden, werden stark bedämpft und sind damit für die Spracherkennung der Sprachbedieneinheit 6 nicht mehr im Bereich der Erfassung.

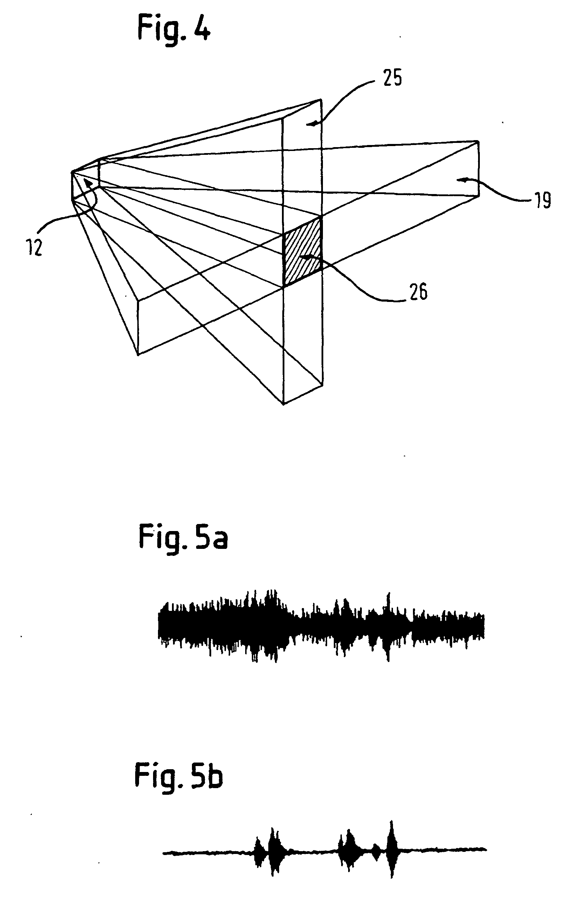

Durch eine Kombination des Schallaufnehmers 19 mit einem senkrecht zu diesem angeordneten Schallaufnehmer 25 mit einer entsprechenden aktiven Auswertung durch ein aktives Mikrofonarray des Mikrofons 12 wird der Bereich, der Sprachsignale empfängt, weiter eingeschränkt. Dazu werden zwei Mikrofonarrays unter einem Winkel von 90 Grad miteinander verbunden (Fig. 4). Die empfangenen Signale werden mit Hilfe bekannter Algorithmen mit einander verknüpft. Es kommen dieselben Algorithmen wie bei einem einzigen Mikrofonarray zum Einsatz. Durch den Einsatz der beiden unter einem rechten Winkel zueinander angeordneten Mikrofonarrays wird eine scharf begrenzte Schallkeule ausgebildet. Es entsteht ein zentraler sensitiver Bereich 26 durch die Kombination der beiden Mikrofonarrays der Schallaufnehmer 19 und 25. Da die aktiven Mikrofonarrays sich sehr leicht in ihrer Richtung schwenken lassen, entsteht ein elektronisch schwenkbares Richtmikrofon. Dieses kann in schwierigen Fällen mit Hilfe eines Services auf die Raumgegebenheiten eingestellt werden.

Durch die Einschränkung der auswertbaren Signale wird die Selektion der gültigen Signale stark verbessert. Signale, welche aus einer anderen als der voreingestellten Richtung kommen, werden so stark abgedämpft, dass z. B. ein die Spracherkennung unmöglich machendes, spielendes Radio im Raum komplett ausgeblendet wird.

## Patentansprüche

1. Elektrisches Haushaltgerät, insbesondere Dunstabzugshaube (9), mit einer ein Mikrofon (12) aufweisenden Sprachbedieneinheit (6), **dadurch gekennzeichnet, dass** das Mikrofon (12) wenigstens zwei Schalleingangsflächen (21, 25) umfasst, die unter einem rechten Winkel zueinander angeordnet sind.

2. Haushaltgerät nach Anspruch 1, **dadurch gekennzeichnet, dass** das Mikrofon (12) ein aktives Mikrofonarray aufweist.

3. Haushaltgerät nach Anspruch 1, **dadurch gekennzeichnet, dass** das Mikrofon (12) zwei Mikrofonarrays aufweist, die unter einem Winkel von 90 Grad miteinander verbunden sind.

4. Haushaltgerät nach Anspruch 3, **dadurch gekennzeichnet, dass** die zwei Mikrofonarrays aktive Mikrofonarrays sind und ein elektronisch schwenkbares Richtmikrofon bilden.

5. Haushaltgerät nach Anspruch 1 bis 4, **dadurch gekennzeichnet, dass** eine Auswerteeinheit vorhanden ist, durch die von den Schalleingangsflächen aufgenommene Schallsignale durch Rechenvorschriften miteinander verknüpfbar sind.

6. Haushaltgerät nach einem der Ansprüche 1 bis 5, **dadurch gekennzeichnet, dass** die von den Schalleingangsflächen aufgenommenen Signale entsprechend einer voreingestellten Richtung abdämpfbar sind.

## Claims

1. Electric domestic appliance, particularly fume extractor hood (9), with a speech control unit (6) comprising a microphone (12), **characterised in that** the microphone (12) has at least two sound input surfaces (21, 25) which are arranged at a right angle relative to one another.

2. Domestic appliance according to claim 1, **characterised in that** the microphone (12) comprises an active microphone array.

3. Domestic appliance according to claim 1, **characterised in that** the microphone (12) comprises two microphone arrays which are connected together at an angle of 90 degrees.

4. Domestic appliance according to claim 3, **characterised in that** the two microphone arrays are active microphone arrays and form an electronically swivelling directional microphone.

5. Domestic appliance according to claim 1 to 4, **characterised in that** an evaluating unit is present, by which sound signals received by the sound input surfaces can be linked together by computing rules.

6. Domestic appliance according to one of claims 1 to 5, **characterised in that** the signals received by the sound input surfaces can be attenuated in correspondence with a preset direction.

## Revendications

1. Appareil ménager électrique, particulièrement hotte d'aspiration (9) équipée d'une unité de commande vocale (6) présentant un microphone (12), **caractérisé en ce que** le microphone (12) comprend au moins deux surfaces d'entrée du son (21, 25) montées à angle droit l'une par rapport à l'autre.

2. Appareil ménager selon la revendication 1, **caractérisé en ce que** le microphone (12) présente une rangée active de microphones.

3. Appareil ménager selon la revendication 1, **caractérisé en ce que** le microphone (12) présente deux rangées de microphones qui sont reliées entre elles sous un angle de 90 degrés.

4. Appareil ménager selon la revendication 3, **caractérisé en ce que** les deux rangées de microphones sont des rangées de microphones actives et forment un microphone directionnel pivotable électroniquement.

5. Appareil ménager selon la revendication 1 à 4, **caractérisé en ce qu'**une unité d'évaluation est présente, qui permet d'interconnecter par des règles de calcul les signaux acoustiques enregistrés par les surfaces d'entrée du son.

6. Appareil ménager selon l'une des revendications 1 à 5, **caractérisé en ce que** les signaux enregistrés par les surfaces d'entrée du son peuvent être atténués selon une direction préréglée.
